# EUROPÄISCHE PATENTSCHRIFT

(11) **EP 0 466 289 B1**
(45) Veröffentlichungstag und Bekanntmachung des Hinweises auf die Patenterteilung: **15.12.1993**
(21) Anmeldenummer: 91250181.4
(22) Anmeldetag: 05.07.1991
(51) Int. Cl.: E05D 5/02, E05D 5/06, H02B 1/38

(54) **Scharnieranordnung für die Tür eines Schaltschrankes**
Hinge arrangement for the door of a switchboard
Agencement de charnière pour la porte d'une armoire de commutation

(30) Priorität: 10.07.1990 DE 4022079
(43) Veröffentlichungstag der Anmeldung: 15.01.1992
(73) Patentinhaber: SIEMENS AKTIENGESELLSCHAFT, 80333 München (DE)
(72) Erfinder: Blum, Richard, W-6057 Dietzenbach (DE); Küster, Willi, W-6460 Gelnhausen (DE); Groh, Hans-Michael, W-6452 Hainburg 2 (DE); Schmidt, Ludwig, W-6000 Frankfurt 90 (DE)

(56) Entgegenhaltungen:
- DE-A- 2 700 100
- DE-A- 3 148 261
- DE-U- 8 810 392
- DE-U- 8 913 102
- US-A- 4 761 852

## Beschreibung

Die Erfindung betrifft eine Tür mit einer Scharnieranordnung für einen Schaltschrank mit einem feststehenden, an einer Frontseite des Schaltschrankes anzubringenden Scharnierbock und einem im Bereich eines abgekanteten Randschenkels der Tür anzubringenden und den Randschenkel umgreifenden bewegbaren Scharnierwinkel, dessen zur Anlage an dem Randsteg der Tür bestimmter Schenkel zur Aufnahme eines Ösenteiles des Scharnierbockes gegabelt ausgebildet ist, wobei die Gabelarme mit dem Ösenteil fluchtende Öffnungen zur Aufnahme eines Scharnierbolzens aufweisen. Eine Tür mit einer Scharnieranordnung dieser Art ist durch die EP-A-0 223 871 bekannt geworden. Die Montage des Scharnierwinkels an der Tür wird dabei durch eine Ausklinkung vereinfacht, in welche der Scharnierwinkel einschiebbar ist. Durch eine Klemmstifteinrichtung werden dann Scharnierwinkel und Tür miteinander verbunden.

Durch die erwähnte Ausklinkung im Randbereich der Tür wird bei der vorstehend erwähnten bekannten Scharnieranordnung der Randsteg der Tür im Bereich jeder Scharnieranordnung unterbrochen. Hierdurch geht die versteifende Wirkung des Randsteges verloren, was zum Einreissen oder Knicken der Tür im Bereich der Ausklinkungen führen kann. Der Erfindung liegt in diesem Zusammenhang die Aufgabe zugrunde, eine ähnlich einfach montierbare Scharnieranordnung zu schaffen, welche die Anbringung einer Ausklinkung im Randsteg nicht erfordert.

Diese Aufgabe wird gemäß der Erfindung dadurch gelöst, daß der zur Auflage auf der Frontseite der Tür bestimmte Frontschenkel des Scharnierwinkels einen sich parallel zur Richtung der Gabelarme erstreckenden Zapfen und die Frontfläche der Tür eine Öffnung mit einer wenigstens dem Querschnitt des Zapfens entsprechenden Abmessung besitzt und daß der Zapfen ein Sackloch für eine Befestigungsschraube besitzt. Durch den Zapfen wird eine ebenso gute Abstützung des Scharnierwinkels in der Tür erreicht, wie dies durch eine Auflage des Scharnierschenkels an den Rändern der Ausklinkung möglich ist. Dagegen unterbleibt fast vollständig eine Schwächung der Tür im Randbereich.

Die Gabelarme des Scharnierwinkels können je einen zur Innenfläche der Tür weisenden Zapfen besitzen, und in dem Randsteg der Tür können Öffnungen zur Aufnahme der Zapfen angeordnet sein. Auf diese Weise wird eine Abstützung und Ausrichtung des Scharnierwinkels an drei Punkten erreicht, die auch in Verbindung mit nur einer Befestigungsschraube eine präzisen und sicheren Halt des Scharnierwinkels ergibt.

Trotz der rechtwinkligen Stellung der Zapfen in den Gabelarmen zur Richtung des Zapfens an dem Frontschenkel des Scharnierwinkels ist eine leichte Montage dadurch zu erreichen, daß die Öffnung in der Frontfläche der Tür ein Übermaß derart besitzt, daß die Zapfen der Gabelarme nach dem Eingreifen des Zapfens des Frontschenkels des Scharnierwinkels durch eine Verschiebung des Scharnierwinkels relativ zu der Tür in Eingriff mit den Öffnungen im Randsteg der Tür bringbar sind. In Verbindung hiermit ist es vorteilhaft, wenn ein U-förmiger Klemmbügel vorgesehen ist, dessen Mittelteil eine Öffnung für die Befestigungsschraube besitzt, und der zur wenigstens teilweisen Auflage auf der Innenfläche der Tür bestimmte Schenkel besitzt. Ferner kann an den Rändern der Schenkel des Klemmbügels je ein Absatz zur Bildung einer an der Innenseite der Tür anliegenden Schulter und ein scharfkantiger Vorsprung zur Lagesicherung gebildet sein und es kann ein mittlerer Vorsprung jedes Schenkels zum Eintritt in die Öffnung der Tür vorgesehen sein. Die Vorsprünge dringen in das Material der Tür ein, wenn nach entsprechender Ausrichtung des Scharnierwinkels die Befestigungsschraube angezogen wird. Eine solche Befestigung ist spielfrei und tragfähig.

Die Gabelarme des Scharnierwinkels können bei parallelen Außenkanten zu den Enden spitz auslaufend gestaltet sein, während der Ösenteil des Scharniebockes der Gestalt der Gabelarme angepaßt ist. Auf diese Weise wird ein annähernd stetiger Übergang von der Breite des Ösenteiles des Scharniebockes zu seinem Befestigungsschenkel gebildet.

Die Erfindung wird im folgenden anhand des in den Figuren dargestellten Ausführungsbeispieles näher erläutert.

Die Figur 1 zeigt in einer auseinandergezogenen perspektivischen Darstellung teilweise vereinfacht die Bestandteile einer Scharnieranordnung.

Die Figur 2 zeigt zum Teil im Schnitt eine Scharnieranordnung im montierten Zustand.

In der Figur 3 ist die Scharnieranordnung gemäß der Figur 2 mit Blick auf einen Randsteg einer Tür dargestellt.

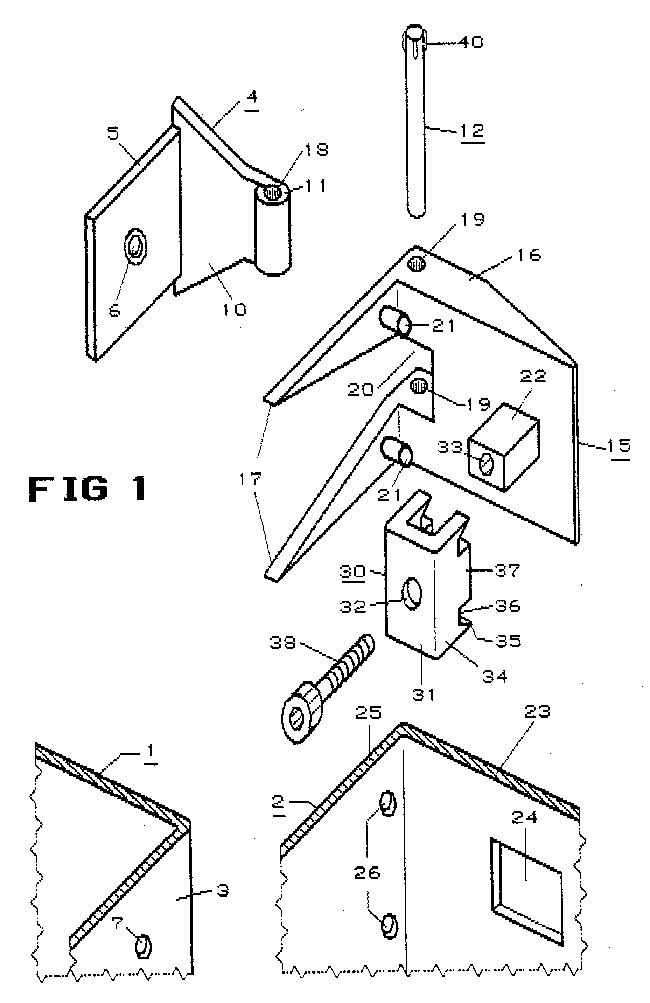

Die Figur 1 zeigt im unteren Teil ein vertikales Gerüstelement 1 sowie einen randseitigen Ausschnitt einer Tür 2 eines Schaltschrankes. Zur Anbringung an einer Frontfläche 3 des Gerüstelementes 1 ist ein Scharnierbock 4 vorgesehen, wie er im oberen Teil der Figur 1 gezeigt ist. Der Scharnierbock 4 hat im wesentlichen die Gestalt eines rechtwinkligen Blechteiles, dessen Fußteil 5 mit einer Öffnung 6 für eine nicht gezeigte Befestigungsschraube versehen ist. In der Frontfläche 3 des Gerüstelementes 1 ist eine Reihe von entsprechenden Öffnungen 7 für die Befestigungsschraube vorgesehen. Ein Ösenteil 10 des Scharnierbockes 4 ist mit einer Öse 11 und einer Ösenöffnung 18 zur Aufnahme eines Scharnierbolzens 12 versehen. Die Öse 11 besitzt eine geringere Höhe als der Befestigungsschenkel 5. Ein Übergang wird durch eine keilartig geschrägte Gestalt des Ösenteiles 10 hergestellt.

Als beweglicher Teil der Scharnieranordnung ist ein Scharnierwinkel 15 vorgesehen, der zwei rechtwinklig zu einem Frontschenkel 16 stehende Gabelarme 17 aufweist. Die Gabelarme 17 besitzen Öffnungen 19 für den Scharnierbolzen 12 und begrenzen eine Ausnehmung 20, die zur Aufnahme der Öse 11 des Scharnierbockes 4 dient. Ausgehend von der Höhe der Ausnehmung 20 sind die Gabelarme 17 zu den Enden hin annähernd spitz zulaufend, d. h. etwa schwalbenschwanzartig geschrägt. Jeder der Gabelarme 17 trägt an seiner Innenseite einen Zapfen 21, der in einer noch zu beschreibenden Weise zur Positionierung und Abstützung des Scharnierwinkels 15 an der Tür 2 dient. Der Frontschenkel 16 des Scharnierwinkels 15 ist mit einem rechtwinklig abragenden starken Zapfen 22 von quadratischem oder rechteckigem Querschnitt versehen, dessen Länge so groß gewählt ist, daß er um ein gewünschten Maß durch eine in der Frontseite 23 der Tür 2 vorgesehene Öffnung 24 hindurchzutreten vermag. In einem abgekanteten Randsteg 25 der Tür 2 sind ferner zwei für die Zapfen 21 der Gabelarme 17 vorgesehene Öffnungen 26 angebracht.

Zur Befestigung des Scharnierwinkels 15 an der Tür 2 dient ferner ein Klemmbügel 30, der eine U-förmige Querschnittsform aufweist. In einem Mittelteil 31 des Klemmbügels 30 befindet sich eine Öffnung 32 für eine Befestigungsschraube 38, die in ein entsprechendes Sackloch 33 des Zapfens 22 einschraubbar ist. Die Schenkel 34 des Klemmbügels 30 sind an den Rändern mit je einem scharfkantigen Vorsprung 35 sowie hieran anschließend mit einem Absatz 36 versehen. Ein verbleibender mittlerer Vorsprung 37 jedes Schenkels 34 des Klemmbügels 30 ist zum Eintreten in die Öffnung 24 der Tür 2 nahe deren Rändern vorgesehen, wie noch erläutert wird.

Zur Montage des Scharnierwinkels 15 an der Tür 2 wird zunächst der Zapfen 22 des Frontschenkels 16 in die Öffnung 24 der Tür 2 eingeführt. Dies ist möglich, weil die Öffnung 24 mit einem solchen Übermaß ausgeführt ist, daß zwischen den Gabelarmen 17 und dem Randsteg 25 zunächst ein Abstand entsprechend der Länge der Zapfen 21 vohanden ist. Durch eine entsprechende Verschiebung des Scharnierwinkels 15 treten dann die Zapfen 21 in die Öffnungen 26 im Randsteg 25 ein. In dieser Stellung der Teile wird von der Innenseite der Tür der Klemmbügel 30 auf den Zapfen 22 des Frontschenkels 16 aufgesetzt. Die mittleren Vorsprünge 37 der Schenkel 34 des Klemmbügels 30 treten dabei zu beiden Seiten des Zapfens 22 in die Öffnung 24 der Tür 2 ein und begrenzen hierdurch das Spiel des Zapfens 22 in der Öffnung 24. Es verbleibt lediglich soviel Spielraum, daß der Scharnierwinkel 15 ausgerichtet und satt zur Anlage an der Tür gebracht werden kann. Wird nun die Befestigungsschraube 38 durch die Öffnung 32 in das Sackloch 33 des Zapfens 22 eingeschaubt, so dringen die scharfkantigen Vorsprünge 35 in das Material der Tür 2 ein und fixieren hierdurch den Scharnierwinkel 15 in der gewünschten Lage. Die Absätze 36 gelangen zur Auflage am Rand der Öffnung 24 und wirken somit als Schultern oder Anschlagflächen.

An der Frontfläche 3 des Gerüstelementes 1 wird der eingangs beschriebene Scharnierbock 4 gleichfalls mittels einer Schraube befestigt. Vorzugsweise wird eine Senkschraube verwendet, um die glatte Innenfläche des Fußteiles 5 nicht zu unterbrechen. Die Tür 2 mit den daran angebrachten Scharnierwinkeln 15 wird nun mit den Ausnehmungen 20 über die Ösen 11 der Scharnierböcke positioniert, um die Scharnierbolzen 12 einsetzen zu können. An ihrem einen Ende sind die Scharnierbolzen 12 nach Art eines Kerbstiftes mit Kerben 40 versehen, wodurch ohne zusätzliche Hilfsmittel ein fester Sitz der Scharnierbolzen 12 erzielbar ist. Andererseits ist es möglich, lediglich durch loses Einstecken der Scharnierbolzen 12 die Funktion der Scharnieranordnung zu prüfen und erst zur endgültigen Anbringung der Tür 2 an dem Schaltschrank durch eine kurzzeitige Krafteinwirkung die Scharnierbolzen 12 festzusetzen.

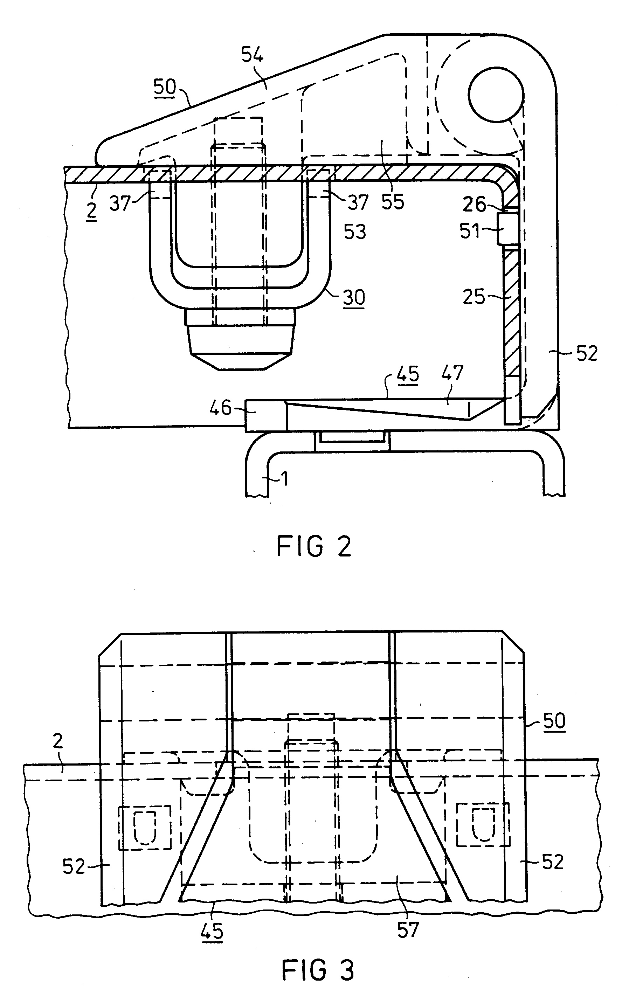

In der Figur 2 ist eine Scharnieranordnung im fertigmontierten Zustand gezeigt. Die gezeigten Teile entsprechend weitgehend der vorstehenden Beschreibung, weisen jedoch teilweise zusätzliche Gestaltungsmerkmale auf. Ein Scharnierbock 45 besitzt ein Fußteil 46 mit einer balligen oder am Rand abgeschrägten Oberfläche 47. Diese Gestaltung erleichtert es, einen Streifen eines Dlchtungsmaterials möglichst dicht anliegendend über die Frontfläche 3 des Gerüstelementes 1 (vgl. Figur 1) und die Scharnierböcke 4 bzw. 45 zu verlegen. Ferner ruht ein in der Figur 2 gezeigter Scharnierwinkel 50 auf der Tür 2, wobei Zapfen 51 von Gabelarmen 52 in Öffnungen 26 des Randschenkels 25 hineinragen. Ferner ragen die mittleren Schenkel 37 des Klemmbügels 30 in die seitlich eines Zapfens 53 verbleibenden Zwischenräume zwischen dem Zapfen 53 und den Rändern der Öffnung 24 der Tür 2 (vgl. Figur 1). Abweichend von der Darstellung in der Figur 1 ist der Frontschenkel 54 des Scharnierwinkels 50 mit einer Ausnehmung 55 versehen. Diese Maßnahme dient lediglich zur Vereinfachung der Herstellung des Scharnierwinkels als Guß- oder Druckgußteil und hat keinen Einfluß auf die beschriebenen Funktionen.

In der Figur 3 ist eine Ansicht dargestellt, die sich dem Betrachter mit Blick auf den Randsteg 25 der Tür 2 bietet (vgl. Figur 1). Es ist zu erkennen, daß der Ösenteil 57 des Scharnierbockes 45 mit der Öse 56 zwischen die Gabelarme 52 des Scharnierwinkels 50 eingreift. In dem anschließenden Bereich zwischen den Gabelarmen 52 und dem Ösenteil 57 ist ein größerer Zwischenraum vorgesehen, um eine unerwünschte Reibung zu vermeiden.

## Patentansprüche

1. Tür (2) mit einer Scharnieranordnung für einen Schaltschrank mit einem feststehenden, an einer Frontseite (3) des Schaltschrankes anzubringenden Scharnierbock (4; 45) und einem im Bereich eines abgekanteten Randschenkels (25) der Tür (2) anzubringenden und den Randschenkel (25) umgreifenden bewegbaren Scharnierwinkel (15; 50), dessen zur Anlage an dem Randsteg (25) der Tür (2) bestimmter Schenkel zur Aufnahme eines Ösenteiles (10; 57) des Scharnierbockes (4; 45) gegabelt ausgebildet ist, wobei die Gabelarme (17; 52) und der Ösenteil (10; 57) fluchtende Öffnungen (18; 19) zur Aufnahme eines Scharnierbolzens (12) aufweisen, **dadurch gekennzeichnet**, daß der zur Auflage auf der Frontseite (3) der Tür (2) bestimmte Frontschenkel (16; 54) des Scharnierwinkels (15; 50) einen sich parallel zur Richtung der Gabelarme (17;52) erstreckenden Zapfen (22; 53) und die Frontfläche (23) der Tür (2) eine Öffnung (24) mit einer wenigstens dem Querschnitt des Zapfens (22; 53) entsprechenden Abmessung besitzt und daß der Zapfen (22; 53) ein Sackloch (33) für eine Befestigungsschraube (38) besitzt.

2. Scharnieranordnung nach Anspruch 1, **dadurch gekennzeichnet**, daß die Gabelarme (17; 52) des Scharnierwinkels (15; 50) je einen zur Innenfläche der Tür (2) weisenden Zapfen (21; 51) besitzen und daß in dem Randsteg (25) der Tür (2) Öffnungen (26) zur Aufnahme der Zapfen (21; 51) angeordnet sind.

3. Scharnieranordnung nach Anspruch 1 und 2, **dadurch gekennzeichnet**, daß die Öffnung (24) in der Frontfläche (23) der Tür (2) ein Übermaß derart besitzt, daß die Zapfen (21; 51) der Gabelarme (17; 52) nach dem Eingreifen des Zapfens (22; 53) des Frontschenkels (16; 54) des Scharnierwinkels (15; 50) durch eine Verschiebung des Scharnierwinkels (15; 50) relativ zu der Tür (2) in Eingriff mit den Öffnungen (26) im Randsteg (25) der Tür (2) bringbar sind.

4. Scharnieranordnung nach Anspruch 3, **dadurch gekennzeichnet**, daß ein U-förmiger Klemmbügel (30) vorgesehen ist, dessen Mittelteil (31) eine Öffnung (32) für die Befestigungsschraube (38) besitzt und der zur wenigstens teilweisen Auflage auf der Innenfläche der Tür (2) bestimmte Schenkel (34) besitzt.

5. Scharnieranordnung nach Anspruch 4, **dadurch gekennzeichnet**, daß an den Rändern der Schenkel (34) des Klemmbügels (30) je ein Absatz (36) zur Bildung einer Schulter und ein scharfkantiger Vorsprung (35) zur Lagesicherung gebildet sind und daß ein mittlerer Vorsprung (37) jedes Schenkels (34) zum Eintritt in die Öffnung (24) der Tür (2) vorgesehen ist.

6. Scharnieranordnung nach einem der vorangehenden Ansprüche, **dadurch gekennzeichnet**, daß die Gabelarme (17; 52) bei parallelen Außenkanten nach den Enden spitz auslaufend gestaltet sind und daß der Ösenteil (10; 57) des Scharnierbockes (4; 45) der Gestalt der Gabelarme (17; 52) angepaßt ist.

## Claims

1. Door (2) with a hinge arrangement for a switch cabinet having a fixed hinge bracket (4; 45) which is to be provided on a front side (3) of the switch cabinet and having a movable hinge angle bracket (15; 50) which is to be provided in the region of a folded edge side piece (25) of the door (2) and embraces the edge side piece (25) and the leg of which, intended for location at the edge fillet (25) of the door (2), is formed in a forked manner for the purpose of receiving an eye portion (10; 57) of the hinge bracket (4; 45), with the fork arms (17; 52) and the eye portion (10; 57) having aligned openings (18; 19) for the purpose of receiving a hinge pin (12), characterised in that the front leg (16; 54) of the hinge angle bracket (15; 50), intended to rest upon the front side (3) of the door (2), has a peg (22; 53) which extends parallel to the direction of the fork arms (17; 52) and the front surface (23) of the door (2) has an opening (24) with a dimension which corresponds at least to the cross section of the peg (22; 53) and in that the peg (22; 53) has a blind hole (33) for a securing screw (38).

2. Hinge arrangement according to claim 1, characterised in that the fork arms (17; 52) of the hinge angle bracket (15; 50) have a respective peg (21; 51) which points towards the inner face of the door (2) and in that openings (26) are arranged in the edge fillet (25) of the door (2) for the purpose of receiving the pegs (21; 51).

3. Hinge arrangement according to claim 1 and 2, characterised in that the opening (24) in the front face (23) of the door (2) has such an over-dimension that the pegs (21; 51) of the fork arms (17; 52) can be brought into engagement with the openings (26) in the edge fillet (25) of the door (2), after engagement of the peg (22; 53) of the front leg (16; 54) of the hinge angle bracket (15; 50), as a result of a displacement of the hinge angle bracket (15; 50) relative to the door (2).

4. Hinge arrangement according to claim 3, characterised in that a U-shaped clamping clip (30) is provided, the central portion (31) of which clip has an opening (32) for the securing screw (38) and which has legs (34) intended to rest at least in part on the inner face of the door (2).

5. Hinge arrangement according to claim 4, characterised in that formed at the edges of the legs (34) of the clamping clip (30) there are, in each case, a step (36) for the formation of a shoulder and a sharp-edged projection (35) for the purpose of positional securement and in that a central projection (37) of each leg (34) is provided for entry into the opening (24) of the door (2).

6. Hinge arrangement according to one of the preceding claims, characterised in that the fork arms (17; 52) are shaped with parallel outer edges so as to taper towards the ends and in that the eye portion (10; 57) of the hinge bracket (4; 45) is adapted to the shape of the fork arms (17; 52).

## Revendications

1. Porte (2) comportant un dispositif à charnière pour une armoire de commande comportant une patte fixe de charnière (4;45), qui doit être fixée à une face frontale (3) de l'armoire de commande, et une cornière de charnière mobile (15;50), qui doit être montée au niveau d'une barrette marginale repliée (25) de la porte (2) et enserre la barrette marginale (25) et dont la branche, qui est destinée à s'appliquer contre la barrette marginale (25) de la porte (2), est réalisée sous la forme d'une fourche de manière à recevoir une partie à oeillet (10;57) de la patte de charnière (4;45), les branches (17;52) de la fourche et la partie en forme d'oeillet (10;57) comportant des ouvertures alignées (18;19) servant à recevoir un boulon de charnière (12), caractérisée par le fait que la branche avant (16;54), qui est destinée à être appliquée sur la face avant (3) de la porte (2), de la cornière de charnière (15;50) possède un élément saillant (22;53) qui s'étend parallèlement à la direction des branches (17;52) de la fourche et que la surface avant (23) de la porte (2) possède une ouverture (24) ayant des dimensions qui correspondent au moins à la section transversale de l'élément saillant (22;53), et que l'élément saillant (22;53) possède un trou borgne (33) pour une vis de fixation (38).

2. Dispositif de charnière suivant la revendication 1, caractérisé par le fait que les branches (17;52) de la fourche de la cornière de charnière (15;209) possèdent chacune un téton (21;51) qui est dirigé à la surface intérieure de la porte (2), et que des ouvertures (26) servant à loger le téton (21;51) sont ménagées dans la barrette marginale (25) de la porte (2).

3. Dispositif de charnière suivant les revendications 1 et 2, caractérisé par le fait que l'ouverture (24) ménagée dans la surface avant (23) de la porte (2) possède une surcote telle qu'après l'engagement de l'élément saillant (22;53) de la branche avant (16;54) de la cornière de charnière (15;50), les tétons (21;51) des branches (17;52) de la fourche peuvent être engagés dans les ouvertures (26) ménagées dans la barrette marginale (25) de la porte (2), sous l'effet d'un décalage de la cornière de charnière (15;50) par rapport à la porte (2).

4. Dispositif de charnière suivant la revendication 3, caractérisé par le fait qu'il est prévu un étrier de serrage en forme de U (30), dont la partie médiane (31) possède une ouverture (32) pour la vis de fixation (38) et qui possède des branches (34) destinées à s'appliquer au moins partiellement sur la surface intérieure de la porte (2).

5. Dispositif de charnière suivant la revendication 4, caractérisé par le fait que respectivement une partie étagée (36) servant à former un épaulement et une partie saillante à arête vive (35) pour le blocage en position sont formées sur les bords des branches (34) de l'étrier de serrage (30), et qu'une partie saillante médiane (37) de chaque branche (34) est destinée à être introduite dans l'ouverture (24) de la porte (2).

6. Dispositif de charnière suivant l'une des revendications précédentes, caractérisé par le fait que lorsque les bords extérieurs sont parallèles, les bras (17;52) de la fourche sont conçus de manière à se terminer par une pointe au niveau de leurs extrémités et que la partie à oeillet (10;57) de la patte de charnière (4;45) est adaptée à la forme des branches (17;52) de la fourche.
